# EUROPEAN PATENT APPLICATION

(11) **EP 2 750 031 A1**
(43) Date of publication of application: **02.07.2014**
(21) Application number: 13199578.9
(22) Date of filing: 24.12.2013
(51) Int. Cl.: G06F 9/44

(54) **Analyzer controlling apparatus and analyzer controlling apparatus program**

(30) Priority: 28.12.2012 JP 2012286574
(71) Applicant: Shimadzu Corporation, Kyoto 604-8511 (JP)
(72) Inventor: Yamamoto, Satoshi, Kyoto, Kyoto 604-8511 (JP)
(74) Representative: Webster, Jeremy Mark

(57) **Abstract**

Provided are a general macro processing function that can be used for a plurality of different analyzer controlling apparatuses and an analyzer controlling apparatus provided with such a function. A processing instruction concerning an analyzer and/or an analyzer controlling apparatus is held in a processing instruction holding unit, and visual information of a command item which visually represents the processing instruction is held in an item holding unit. Moreover, a relation between the command item and the processing instruction is held in a command associating unit. An edit screen displaying unit displays an edit screen on a display apparatus 14, the edit screen including an item presentation region for displaying the command item held in the item holding unit and an edit region for placing the command item. In response to an operation by a user through an input unit 16, an edit supporting unit moves and arranges the command item in the item presentation region to the edit region. Upon reception of a macro execution instruction, a macro executing unit refers to the processing instruction holding unit based on information of the command associating unit with regard to the command item arranged in the edit region, and transmits the instruction to the analyzer and/or the analyzer controlling apparatus.

## Description

### TECHNICAL FIELD

The present invention relates to an analyzer controlling apparatus connected to or connectable to an analyzer such as an infrared spectrophotometer, an ultraviolet-visible spectrophotometer, or a chromatograph, and, more particularly, to a macro processing function used in the controlling apparatus.

### BACKGROUND ART

When a sample is analyzed using an analyzer, an analyzer controlling apparatus connected to the analyzer has been used: to set various parameters used in the analysis and control the analyzer based on the parameters; to save the analysis data obtained as the result of the analysis; and to perform data processing such as graph drawing, peak detection, and statistical processing based on the analysis data.

Normally, an analyzer controlling apparatus is actually a general-purpose computer in which analyzer controlling software is installed. When a user appropriately operates the computer to execute the analyzer controlling software, the control of the analyzer and the data processing as described above can be performed.

The operations of controlling the analyzer and the processing the analysis data are in many cases processed routinely. An example of such routine processes is [apparatus initialization → spectrum measurement → spectrum data processing → saving data to file → report printing → end]. In consideration of this, in the analyzer controlling apparatus, such a series of processing instructions is normally registered in advance as macro processing, and then can be read out as needed and simply executed, or executed after being appropriately modified.

Such a series of processing instructions (which is called command sequence) is often inputted and edited using a programming language such as C language or BASIC language. A problem is that, because many users of the analyzer are familiar to chemical fields, it is rather difficult for the users to create and edit a command sequence using such programming languages. Considering such situations, systems have been developed which allow such users to visually create a command sequence (see, for example, Patent Document 1). In such systems, for example, one process is assigned to one figure, and such figures are placed in an appropriate order like drawing a flowchart, whereby a command sequence is completed.

### BACKGROUND ART DOCUMENT

### PATENT DOCUMENT

[Patent Document 1] JP-A 2003-156435

### DISCLOSURE OF THE INVENTION

### PROBLEMS TO BE SOLVED BY THE INVENTION

Such a system of enabling a visual creation of a command sequence for macro processing allows a user who is not familiar with programming languages to easily create and edit the command sequence.

In conventional apparatuses, however, such a function for creating a command sequence (which is called "macro processing function"; this macro processing function is normally implemented as a software for executing a predetermined program on a computer) is often included in every analyzer controlling apparatus. Hence, the macro processing function needs to be developed for each of different analyzer controlling apparatuses, which causes a problem of large development time, effort, and cost.

In view of the above, embodiments of the present invention provide a general macro processing function that can be used for a plurality of different analyzer controlling apparatuses and an analyzer controlling apparatus provided with such a function. Moreover, embodiments of the present invention provide a macro processing function that enables even a user who is not familiar with programming languages to easily create a command sequence.

### MEANS FOR SOLVING THE PROBLEMS

Preferably, the present invention provides an analyzer controlling apparatus for controlling an analyzer and processing analysis data obtained by the analyzer, including:
a processing instruction holding unit for holding a processing instruction which is an instruction for controlling the analyzer and/or an instruction for processing the data obtained by the analyzer;
an item holding unit for holding visual information of a command item which visually represents the processing instruction;
a command associating unit for holding information for associating the processing instruction held by the processing instruction holding unit with the command item held by the item holding unit;
an edit screen displaying unit for displaying an edit screen on a display apparatus, the edit screen including an item presentation region for displaying the command item held in the item holding unit and an edit region for placing the command item;
an edit supporting unit for, in response to an input operation by a user through an input unit, moving and arranging the command item in the item presentation region to the edit region; and
a macro executing unit for, upon reception of a macro execution instruction, referring to the command associating unit and the processing instruction holding unit based on the command item arranged in the edit region, and transmitting the processing instruction to the analyzer and/or the analyzer controlling apparatus.
Suitably the analyzer controlling apparatus is connected to an analyzer, for example a spectrophotometer or a chromatograph.
The present invention also provides a method of controlling an analyzer and processing analysis data, comprising steps corresponding to those disclosed herein with respect to the analyzer controlling apparatus.
The present invention also provides a method of operating the analyzer controlling apparatus.
The present invention also provides a computer program (product) adapted to perform the method(s). The present invention also provides a computer-readable storage medium including the computer program.

### EFFECTS OF THE INVENTION

In the analyzer controlling apparatus according to the present invention, the instruction (control instruction) for controlling the analyzer and/or the instruction (data processing instruction) for processing the data obtained by the analyzer are held by the processing instruction holding unit. Accordingly, for various analyzers, the control instruction and the data processing instruction are held in advance by the processing instruction holding unit of the analyzer controlling apparatus according to the present invention, whereby a macro processing function supporting all the various analyzers can be executed. Then, after these instructions are held in this way, macro processing can be executed using an easy user interface. Accordingly, with the use of the analyzer controlling apparatus according to the present invention, the user can execute the macro processing using a common and easy method for the various analyzers. That is, the portion for executing the macro processing function does not need to be developed for each analyzer and each analyzer controlling apparatus.

### BRIEF DESCRIPTION OF THE DRAWINGS

Fig. 1 is a diagram illustrating a schematic configuration of an embodiment of an analyzer controlling apparatus according to the present invention.
Fig. 2A is a diagram illustrating a schematic configuration of an analyzer controlling apparatus program.
Fig. 2B is a diagram illustrating a schematic configuration of a macro edit & execution program.
Fig. 3 illustrates an example of an edit screen displayed by an edit screen displaying unit.
Fig. 4 illustrates another example of the edit screen displayed by the edit screen displaying unit.
Fig. 5 illustrates an example of a parameter setting screen.

### BEST MODES FOR CARRYING OUT THE INVENTION

Hereinafter, an embodiment of an analyzer controlling apparatus according to the present invention is described in detail with reference to the drawings.

Whilst the features, functions and effects are described with reference to the drawings, they are generally applicable, individually or in combination, to the present invention. Thus, embodiments of the present invention include one or more of the features, functions and effects described below.

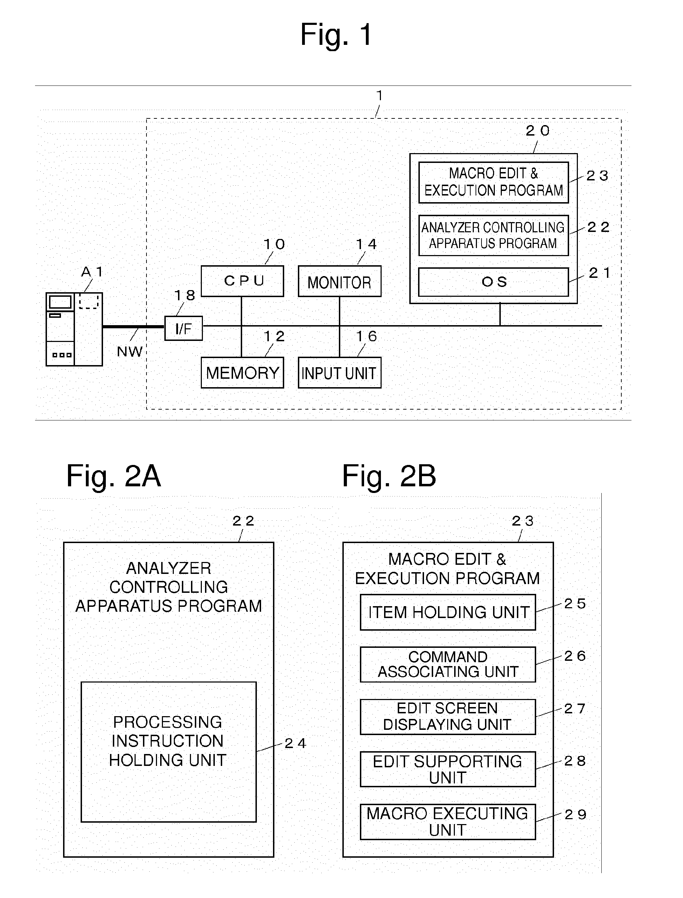

Fig. 1 illustrates an embodiment of an analyzer controlling apparatus 1 according to the present invention. The analyzer controlling apparatus 1 is connected to an analyzer A1, for example, a chromatograph. The analyzer controlling apparatus 1 is a computer, in which a central processing unit (CPU) 10, a memory 12, a monitor (display unit) 14 including a liquid crystal display (LCD), an input unit 16 including a keyboard and a mouse, and a storage 20 including large-capacity storage devices such as a hard disk and a solid state drive (SSD) are connected to each other.

The analyzer controlling apparatus 1 includes an interface (I/F) 18 for achieving direct connection with an external device via a universal serial bus (USB) or the like and connection with an external device via a network such as a local area network (LAN), and the analyzer controlling apparatus 1 is connected to the analyzer A1 by the I/F 18 via a network cable NW.

The storage 20 stores an operating system (OS) 21 as well as an analyzer controlling apparatus program 22 and a macro edit & execution program 23. When the analyzer controlling apparatus program 22 (and other installed programs) are executed, various controls of the analyzer A1 and various processes on analysis data acquired by the analyzer A1 are performed. In this way, the analyzer controlling apparatus 1 can execute various processes relating to analysis, but these are functions similar to those of conventional analyzer controlling apparatuses, and hence detailed description is omitted. Only a configuration relating to a macro processing function which is characteristic of the present invention is described below.

As illustrated in Fig. 2A, the analyzer controlling apparatus program 22 includes a processing instruction holding unit 24. The processing instruction holding unit 24 holds a processing instruction which is an instruction for controlling the analyzer and/or an instruction for processing data obtained by the analyzer. This processing instruction is written in language such as BASIC, Python, Perl, or Ruby. When the control target is changed from the analyzer A1 to another analyzer A2, the analyzer controlling apparatus program 22 and the processing instruction holding unit 24 included in the program 22 are replaced with ones supporting the analyzer A2.

As illustrated in Fig. 2B, the macro edit & execution program 23 includes an item holding unit 25, a command associating unit 26, an edit screen displaying unit 27, an edit supporting unit 28, and a macro executing unit 29. The item holding unit 25 holds pieces of visual information of command items which visually express various processing instructions held in the processing instruction holding unit 24 of the analyzer controlling apparatus program 22 respectively. These can be written in an XML format, for example. The command associating unit 26 holds information for associating the visual information of each command item held by the item holding unit 25 with each processing instruction held in the processing instruction holding unit 24. Note that the information for associating the visual information of each command item with each processing instruction may be provided separately in this way, and may be included in (the visual information of) each command item itself.

Both the processing instruction holding unit 24 and the item holding unit 25 that are respectively included in the analyzer controlling apparatus program 22 and the macro edit & execution program 23 are implemented in the form of software when the CPU 10 executes the analyzer controlling apparatus program 22 and the macro edit & execution program 23 in cooperation with the memory 12 and the like.

In the present embodiment illustrated in Fig. 1, the analyzer controlling apparatus program 22 and the macro edit & execution program 23 are included in the storage 20 of the analyzer controlling apparatus 1. Alternatively, in the present invention, both or any one of these programs may be provided outside of the analyzer controlling apparatus 1, for example, in an accessible mode on a network, as a matter of course.

The edit screen displaying unit 27 displays a macro edit screen on the monitor 14. The macro edit screen includes: an item presentation region for displaying the command items held in the item holding unit 25; and an edit region for placing the command items.

The edit supporting unit 28 moves the command items in the item presentation region to the edit region and arranges the command items, in response to execution of an input operation by a user through the input unit 16 such as a mouse.

The macro executing unit 29 refers to the command associating unit 26 based on the command items arranged in the edit region, and transmits a corresponding processing instruction held in the processing instruction holding unit 24, to the analyzer and/or the analyzer controlling apparatus, when a macro execution instruction is received from the user through the input unit 16 or as a result of a predetermined process, for example.

Hereinafter, an operation of the analyzer controlling apparatus program 22 is specifically described.

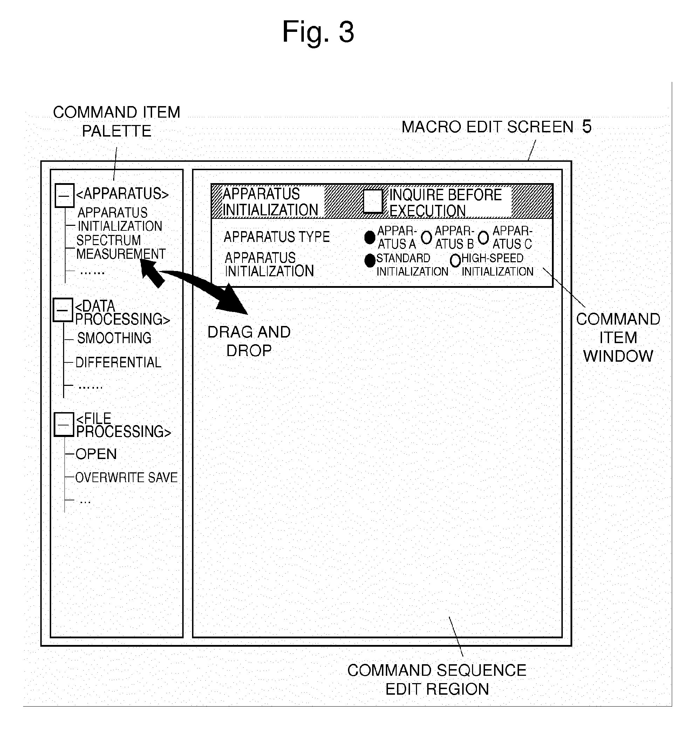

For example, the user inputs a macro creation instruction on an execution screen of the analyzer controlling apparatus program 22. Consequently, the edit screen displaying unit 27 visually places the command items held in the item holding unit 25, and thus displays a macro edit screen 5 for creating a command sequence, on the monitor 14. An example of the macro edit screen 5 is illustrated in Fig. 3.

The macro edit screen 5 displayed by the edit screen displaying unit 27 is divided into a command item palette (which corresponds to the item presentation region in the present invention) and a command sequence edit region (which corresponds to the edit region in the present invention).

In the command item palette, the command items are displayed so as to be divided into categories such as <APPARATUS>, <DATA PROCESSING>, and <FILE PROCESSING>.

Now the user moves a cursor (arrow) on the macro edit screen 5 by operating the input unit 16, and drags and drops one of the command items displayed on the command item palette, onto the command sequence edit region. The edit supporting unit 28 that has received this input operation places the command item onto the command sequence edit region. In the example of Fig. 3, the command item of "APPARATUS INITIALIZATION" is displayed as a command item window on the command sequence edit region.

Note that the input operation by the user on the macro edit screen 5 is not limited to such a drag and drop operation using the mouse, and may be, for example, input using the keyboard and voice input.

In this way, as the user sequentially drags and drops desired command items from the command item palette onto the command sequence edit region, the edit supporting unit 28 linearly (from the top to the bottom in the example of Fig. 3) places the plurality of command items as command item windows in response to the respective operations.

In the case where a command item can be used multiple times in one command sequence, the edit supporting unit 28 allows this command item to be placed multiple times in the command sequence edit region. Meanwhile, in the case where the number of times a command item can be used in one command sequence is limited, the edit supporting unit 28 limits the placement of this command item in the command sequence edit region, in accordance with the maximum number of times of use. For example, when a command item has already been used the maximum number of times in the command sequence edit region, the edit supporting unit 28 may delete this command item from the command item palette, or may display a message to the effect that the use of this command item is not allowed. The edit supporting unit 28 may display this command item with a changed luminance or color in the command item palette.

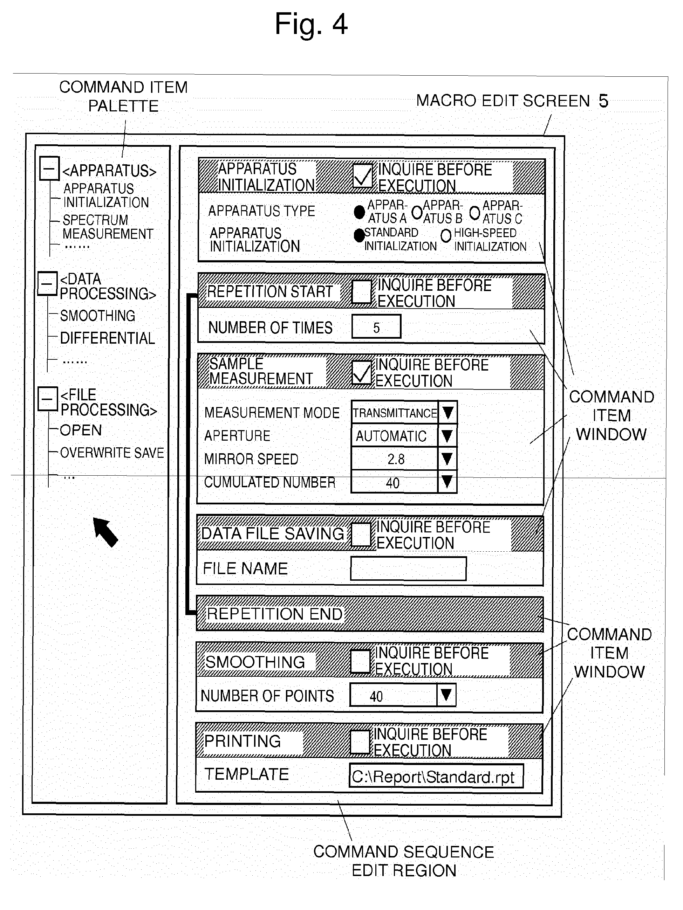

Through repetition of the above-mentioned operation, the command sequence is created (Fig. 4). In this way, the command items are linearly placed, whereby even a user who is not familiar with general programming can easily create the command sequence.

Note that, in order to enable creation of a desired command sequence by linearly placing command items, a command item that requires a branching process may not be provided. Further, for example, a command item of "REPETITION START" may be automatically connected by a line to a corresponding command item of "REPETITION END", whereby predetermined command items may be looped a designated number of times. Moreover, in the case where a plurality of different pieces of processing target data exist, the plurality of such pieces of data may be collectively processed using one command item (for example, "SMOOTHING" in the example of Fig. 4).

As illustrated in the examples of Fig. 3 and Fig. 4, command items that require input of parameters each include a parameter setting part for receiving settings of the parameters. For example, a command item window of "APPARATUS INITIALIZATION" is provided with a parameter setting part in which the user can select any of "APPARATUS A", "APPARATUS B", and "APPARATUS C" as a parameter of an apparatus type, and can select any of "STANDARD INITIALIZATION" and "HIGH-SPEED INITIALIZATION" as a parameter of apparatus initialization. With such a configuration, the user can understand detailed contents only at a glance at the macro edit screen 5, and also can simultaneously input parameters while creating the command sequence.

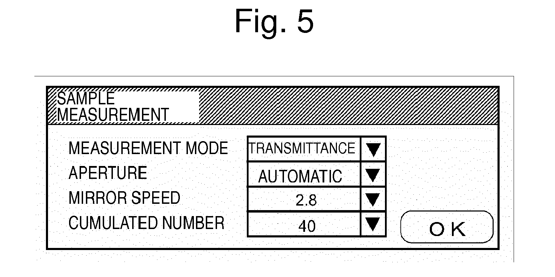

Moreover, in the examples illustrated in Fig. 3 and Fig. 4, each command item window is provided with a check box of "INQUIRE BEFORE EXECUTION" about the parameter setting part. In the case where the check box is checked, at the moment at which the macro executing unit 29 executes macro processing, the edit supporting unit 28 displays, for example, such a parameter setting screen as illustrated in Fig. 5 on the monitor 14, to prompt the user to set the parameters. Alternatively, also in the case where it is detected that necessary parameters are lacking at the moment when the macro executing unit 29 executes macro processing or at a stage therebefore, the edit supporting unit 28 displays such a parameter setting screen as illustrated in Fig. 5.

When the user inputs a macro execution instruction through an appropriate process (for example, through an operation on the input unit 16) after the creation of the command sequence, the macro executing unit 29 refers to the command associating unit 26 with regard to the command items arranged on the macro edit screen 5, and transmits a corresponding processing instruction held in the processing instruction holding unit 24, to the analyzer A1 and/or the analyzer controlling apparatus 1. As a result, the analyzer A1 and/or the analyzer controlling apparatus 1 perform processing based on the processing instruction. In this way, the macro processing is executed.

Hereinabove, the analyzer controlling apparatus according to the present invention has been described with specific examples. The above-mentioned embodiment is given as a mere example, and hence change, improvement, and addition can be made thereon as appropriate within the spirit of the present invention.

Indeed, as noted above, embodiments of the present invention include one or more of the features, functions and effects described above.

For example, in the case where a command item window is vertically long, collapsible display may be possible. In this way, a larger number of command items can be displayed in the command sequence edit region at a time.

Moreover, a command sequence created by the edit supporting unit 28 may be stored in a predetermined storage. In this way, the command sequence processed routinely can be invoked as needed to be used.

Further, a plurality of analyzers may be connected to the analyzer controlling apparatus of the present invention.

### EXPLANATION OF NUMERALS

1 ... Analyzer Controlling Apparatus
5 ... Macro Edit Screen
10 ... CPU
12 ... Memory
14 ... Monitor
16 ... Input Unit
18 ... I/F
A1 ... Analyzer
20 ... Storage
21 ... OS
22 ... Analyzer Controlling Apparatus Program
23 ... Macro Edit & Execution Program
24 ... Processing instruction Holding Unit
25 ... Item Holding Unit
26 ... Command Associating Unit
27 ... Edit Screen Displaying Unit
28 ... Edit Supporting Unit
29 ... Macro Executing Unit

## Claims

1. An analyzer controlling apparatus for controlling an analyzer and processing analysis data obtained by the analyzer, comprising:
a processing instruction holding unit for holding a processing instruction which is an instruction for controlling the analyzer and/or an instruction for processing the data obtained by the analyzer;
an item holding unit for holding visual information of a command item which visually represents the processing instruction;
a command associating unit for holding information for associating the processing instruction held by the processing instruction holding unit with the command item held by the item holding unit;
an edit screen displaying unit for displaying an edit screen on a display apparatus, the edit screen including an item presentation region for displaying the command item held in the item holding unit and an edit region for placing the command item;
an edit supporting unit for, in response to an input operation by a user through an input unit, moving and arranging the command item in the item presentation region to the edit region; and
a macro executing unit for, upon reception of a macro execution instruction, referring to the command associating unit and the processing instruction holding unit based on the command item arranged in the edit region, and transmitting the processing instruction to the analyzer and/or the analyzer controlling apparatus.

2. The analyzer controlling apparatus according to claim 1, wherein a command item corresponding to a processing instruction that requires input of a parameter includes a parameter setting part for receiving settings of the parameter by the user.

3. The analyzer controlling apparatus according to claim 2, wherein, in a case where the parameter setting part is set so as to make an inquiry about the parameter at the time of macro execution by the macro executing unit or where the macro executing unit detects a command item in which a value of the parameter to be inputted has not been inputted, the edit supporting unit displays a parameter setting screen for prompting the user to input the parameter.

4. A non-transitory computer readable medium recording an analyzer controlling apparatus program that is used for an analyzer controlling apparatus for controlling an analyzer and processing analysis data obtained by the analyzer,
the medium being readable by a computer capable of accessing:
a processing instruction holding unit for holding a processing instruction which is an instruction for controlling the analyzer and/or an instruction for processing the data obtained by the analyzer;
an item holding unit for holding visual information of a command item which visually represents the processing instruction; and
a command associating unit for holding information for associating the processing instruction held by the processing instruction holding unit with the command item held by the item holding unit,
the analyzer controlling apparatus program causing the computer to function as:
an edit screen displaying unit for displaying an edit screen on a display apparatus, the edit screen including an item presentation region for displaying the command item held in the item holding unit and an edit region for placing the command item;
an edit supporting unit for, in response to an input operation by a user through an input unit, moving and arranging the command item in the item presentation region to the edit region; and
a macro executing unit for, upon reception of a macro execution instruction, referring to the command associating unit and the processing instruction holding unit based on the command item arranged in the edit region, and transmitting the processing instruction to the analyzer and/or the analyzer controlling apparatus.
